# EUROPÄISCHE PATENTSCHRIFT

(11) **EP 0 674 164 B1**
(45) Veröffentlichungstag und Bekanntmachung des Hinweises auf die Patenterteilung: **30.07.1997**
(21) Anmeldenummer: 94810168.8
(22) Anmeldetag: 18.03.1994
(51) Int. Cl.: G01L 9/00

(54) **Kapazitiver Drucksensor bzw. kapazitiver Differenzdrucksensor**
Capacitive pressure sensor or differential pressure sensor
Capteur capacitif de pression ou de pression différentielle

(43) Veröffentlichungstag der Anmeldung: 27.09.1995
(73) Patentinhaber: ENVEC Mess- und Regeltechnik GmbH + Co., 79576 Weil am Rhein (DE)
(72) Erfinder: Lange, Jürgen, Dipl. Ing., D-34246 Vellmar (DE); Gill, Norbert, D-34246 Vellmar (DE)
(74) Vertreter: Morstadt, Volker, Dipl.-Ing. c/o Endress + Hauser Flowtec AG

(56) Entgegenhaltungen:
- EP-A- 0 472 108
- EP-A- 0 544 934
- DE-A- 4 004 275

## Beschreibung

Die Erfindung betrifft kapazitive Drucksensoren bzw. kapazitive Differenzdrucksensoren. Ähnliche Sensoren sind, zum Beispiel, in DE-A-40 04 275 beschrieben.

In der US-A 43 88 668 ist ein kapazitiver Drucksensor beschrieben, der umfaßt:
- einen Grundkörper aus Keramik,
   -- auf dessen einer Oberfläche eine erste metallische Elektrode in direktem Kontakt mit dem Grundkörper angeordnet ist,
- eine Membran aus Keramik,
   -- die unter Bildung einer Kammer in einem definierten Abstand mittels Materials einer ursprünglichen Glasfritte als eines Abstandsstücks mit der Membran mechanisch fest und druckdicht verbunden ist und
   -- die auf der dem Grundkörper zugewandten Oberfläche mit einer zweiten metallischen Elektrode versehen ist, und
- Zuleitungen,
   -- die im Bereich des Abstandsstücks nach innen zu den Elektroden führen.

Des weiteren ist in der US-A 45 31 415 ein kapazitiver Differenzdrucksensor beschrieben, der umfaßt:
- einen Grundkörper aus Keramik,
   -- auf deren beiden voneinander abgewandten Oberflächen - der ersten bzw. der zweiten Oberfläche - eine erste bzw. dritte metallische Elektrode in direktem Kontakt mit dem Grundkörper angeordnet ist,
- eine erste bzw. eine zweite Membran aus Keramik,
   -- die unter Bildung einer ersten bzw. einer zweiten Kammer in einem definierten Abstand mittels Materials der ursprünglichen Glasfritte als eines jeweiligen Abstandsstücks mit dem Grundkörper mechanisch fest und druckdicht verbunden ist und
   -- die auf der dem Grundkörper zugewandten Oberfläche mit einer zweiten bzw. einer vierten metallischen Elektrode versehen ist, und
- eine die beiden Kammern verbindende, durch den Grundkörper hindurch und nach außen führende Bohrung,
   -- wobei die beiden Kammern und die Bohrung mit Öl gefüllt sind.

Bei beiden erwähnten Arten von Drucksensoren ist die Verhinderung eines Kurzschlusses zwischen den einander gegenüberliegenden Elektroden wichtig. Solche Kurzschlüsse können durch bei der Herstellung zwischen die Elektroden gelangte und dort nicht entdeckte Materialpartikel oder im Betrieb durch Drücke, die größer als der für einen konkreten Drucksensortyp zugelassene Druck sind und daher zu einer Berührung der Elektroden führen, oder durch sich von Membran und/oder Grundkörper ablösende Teile der Elektroden, die sich dann wieder berühren, hervorgerufen werden.

Nach den bereits erwähnten US-A 45 31 415 und DE-A-40 04 275 hat man das Kurzschluß-Problem schon dadurch zu lösen versucht, daß auf dem Grundkörper einige über dessen Elektrode vorstehende Isolierstoffteile als Vorsprünge angebracht wurden, so daß sich die Elektrode der Membran bei unzulässig hohem Druck auf den Vorsprüngen abstützt und somit die Elektrode des Grundkörpers nicht berühren kann.

Durch diese Ausbildung wird aber nur die oben an zweiter Stelle genannte Kurzschlußursache beseitigt, während die beiden anderen Ursachen nicht vermieden sind. Die Erfindung dient daher der generellen Lösung des Kurzschluß-Problems.

Hierzu besteht die Erfindung einerseits in einem kapazitiven Drucksensor, der umfaßt:
- einen Grundkörper aus Keramik,
   -- auf dessen einer Oberfläche
      --- eine erste metallische Elektrode und
      --- mindestens darauf eine aus einer ursprünglichen Glasfritte entstandene Glasschicht angeordnet sind,
- eine Membran aus Keramik,
   -- die unter Bildung einer Kammer in einem definierten Abstand mittels Materials der ursprünglichen Glasfritte als eines Abstandsstücks mit dem Grundkörper mechanisch fest und druckdicht verbunden ist und
   -- die kammerseitig mit einer zweiten metallischen Elektrode versehen ist, und
- Zuleitungen,
   -- die im Bereich des Abstandsstücks nach innen und/oder durch die Membran hindurch zu den Elektroden führen.

Die Erfindung besteht andererseits in einem kapazitiven Differenzdrucksensor, der umfaßt:
- einen Grundkörper aus Keramik,
   -- auf deren beiden voneinander abgewandten Oberflächen - der ersten bzw. der zweiten Oberfläche - jeweils
      --- eine erste bzw. dritte metallische Elektrode und
      --- mindestens darauf eine aus einer ursprünglichen Glasfritte entstandene erste bzw. zweite Glasschicht angeordnet sind,
- eine erste bzw. eine zweite Membran aus Keramik,
   -- die unter Bildung einer ersten bzw. einer zweiten Kammer in einem definierten Abstand mittels Materials der ursprünglichen Glasfritte als eines jeweiligen Abstandsstücks mit der ersten bzw. der zweiten Oberfläche des Grundkörper mechanisch fest und druckdicht verbunden und
   -- die jeweils kammerseitig mit einer zweiten bzw. einer vierten metallischen Elektrode versehen sind,
- Zuleitungen,
   -- die im Bereich des jeweiligen Abstandsstücks nach innen und/oder durch die erste bzw. zweite Membran oder durch beide Membranen hindurch zu den jeweiligen Elektroden führen, und
- eine die beiden Kammern verbindende, mindestens durch den Grundkörper hindurch und nach außen führende Bohrung,
   -- wobei die beiden Kammern und die Bohrung mit Öl gefüllt sind.

Nach einer Weiterbildung des Drucksensors der Erfindung kann auf der die Elektrode des Grundkörpers bedeckenden Glasschicht eine dünne Isolierschicht aus dem Material der Keramik des Grundkörpers oder aus einem Hochtemperaturglas angebracht sein, wobei die Membran mit der Isolierschicht über das Abstandsstück verbunden ist.

Nach einer Weiterbildung des Differenzdrucksensors der Erfindung kann auf der jeweiligen die Elektroden des Grundkörpers bedeckenden Glasschicht eine jeweilige dünne Isolierschicht aus dem Material der Keramik des Grundkörpers oder aus einem Hochtemperaturglas angebracht sein, wobei die jeweilige Membran mit der jeweiligen Isolierschicht über das jeweilige Abstandsstück verbunden ist.

Durch die auf der Elektrode des Grundkörpers vorgesehene Glasschicht wird erreicht, daß keinerlei Kurzschlüsse zwischen den Elektroden von Grundkörper und Membran mehr auftreten können, da die eine Elektrode mit einem Überzug aus Isolierstoff vollständig bedeckt ist.
Ferner sind die Elektroden des Grundkörpers praktisch vollständig gegen Feuchtigkeit geschützt, die bei dem eingangs zuerst referierten Drucksensor in die Kammer gelangen kann, wenn dieser nicht als Absolutdruck-Sensor mit evakuierter Kammer, sondern als Referenzdruck-Sensor mit einer Kammer, die über eine Öffnung mit der Umgebung verbunden ist, eingesetzt wird, vgl. die US-A 50 79 953, oder die bei dem oben an zweiter Stelle referierten Differenzdrucksensor in der Ölfüllung als Wasseranteil enthalten sein kann. Dieser Feuchtigkeitsschutz erhöht die Langzeit-Beständigkeit des Drucksensors bzw. des Differenzdrucksensors.

Die Erfindung wird nun anhand von in den Figuren der Zeichnung dargestellten Ausführungsbeispielen näher erläutert. Diese Figuren sind zur besseren zeichnerischen Darstellbarkeit nicht maßstäblich gezeichnet, und darin sind gleiche Teile mit denselben Bezugszeichen versehen.
- Fig. 1 zeigt: im Schnitt einen-kapazitiven Drucksensor,
- Fig. 2 zeigt: im Schnitt eine Weiterbildung des kapazitiven Drucksensors von Fig. 1,
- Fig. 3 zeigt: im Schnitt einen kapazitiven Differenzdrucksensor, und
- Fig. 4 zeigt: im Schnitt eine Weiterbildung des kapazitiven Differenzdrucksensors von Fig. 3.

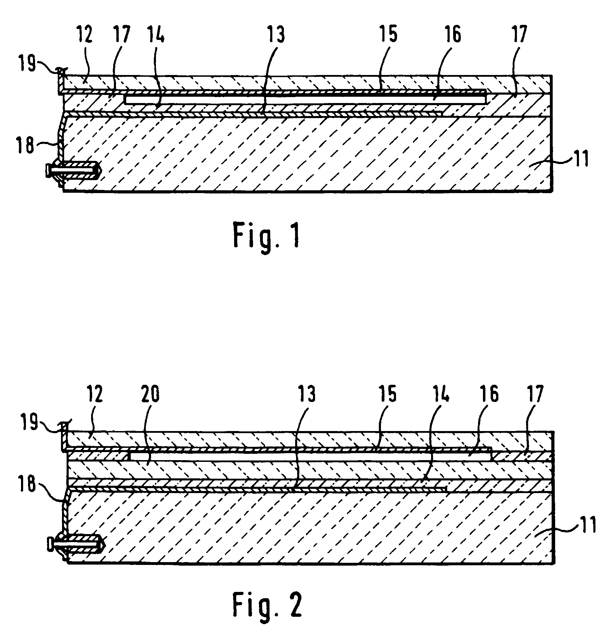

Der kapazitive Drucksensor des Ausführungsbeispiels von Fig. 1, die ihn im Schnitt zeigt, umfaßt einen Grundkörper 11 und eine Membran 12, die jeweils aus, vorzugsweise derselben, Keramik bestehen. Hierfür eignet sich besonders gut Aluminiumoxid hoher Reinheit. Grundkörper und Membran sind im nicht dargestellten Grundriß vorzugsweise kreisförmig oder rechteckförmig. Auf der einen Oberfläche des Grundkörpers 11 sind eine erste metallische Elektrode 13 und darauf eine aus einer ursprünglichen Glasfritte entstandene Glasschicht 14 angeordnet.

Grundkörper 11 und Membran 12 bilden eine Kammer 16, da sie in einem definierten Abstand von z.B. 20 µm mittels Materials der ursprünglichen Glasfritte als eines Abstandsstücks 17 am jeweiligen Rand entlang miteinander mechanisch fest und druckdicht verbunden sind.

Die Membran 12 ist kammerseitig mit einer zweiten metallischen Elektrode 15 versehen. Die beiden Elektroden 13, 15 bilden somit einen Kondensator, dessen Dielektrikum zum Teil aus der Glasschicht 14 und zum Teil aus Luft oder Vakuum besteht.

Zu den Elektroden führen Zuleitungen 18, 19, die im Bereich des Abstandsstücks 17 in Richtung Kammer führen. Es ist auch möglich, die Elektrode 15 der Membran 12 durch diese hindurch nach außen zu führen.

Die Glasfritte wird während des Herstellens des Drucksensors auf die die Elektrode 13 enthaltende Oberfläche des Grundkörpers 11, vorzugsweise ganzflächig, als Schicht aufgebracht. Im Randbereich wird deren Dicke so erhöht, daß nach einem Erhitzungsschritt, der dem Schmelzen der Glasfritte dient, das Abstandstück 17 entsteht. Es ist somit im Randbereich einstückig mit der Glasschicht 14 ausgebildet. Die erwähnte Erhöhung kann z.B. durch Aufbringen von jeweils einem Glasfrittering auf die Glasfritteschicht und die Membran-Innenseite erreicht werden.

Bei der In Fig. 2 wiederum im Schnitt dargestellten Weiterbildung des kapazitiven Drucksensors von Fig. 1 ist auf der gleichmäßig dünnen Glasschicht 14, die wiederum aus einer Glasfritte nach deren Erhitzen entstanden ist, eine dünne Isolierschicht 20 aus dem Material der Keramik des Grundkörpers 11 oder aus einem solchen Hochtemperaturglas angebracht, das eine ausreichende Haftung an dem bei Überlastung auf Scherung beanspruchten Abstandsstück 17 gewährleistet.

In diesem Fall ist die Glasschicht 14 am Rande nicht wie bei Fig. 1 verstärkt, sondern das Abstandsstück 17 ist durch einen auf den Rand der Isolierschicht 20 aufgebrachten Ring aus Glasfritte gebildet.

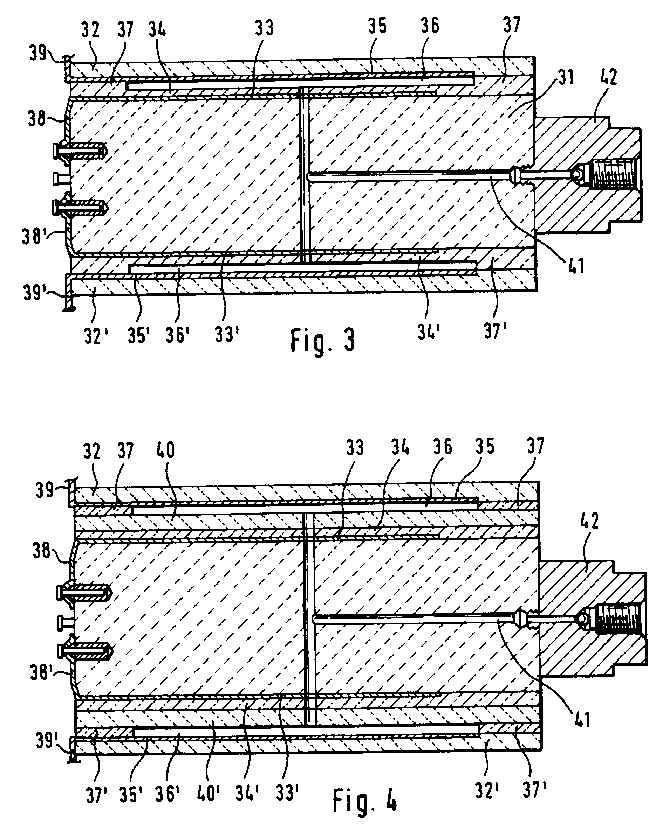

Der kapazitive Differenzdrucksensor von Fig. 3, die ihn wieder im Schnitt zeigt, umfaßt einen Grundkörper 31 und eine erste Membran 32 sowie eine zweite Membran 32', die jeweils aus, vorzugsweise derselben, Keramik bestehen. Hierfür eignet sich ebenfalls besonders gut Aluminiumoxid hoher Reinheit. Grundkörper und Membran sind im nicht dargestellten Grundriß auch hier vorzugsweise kreisförmig oder rechteckförmig.

Auf jeder der beiden voneinander abgewandten Oberflächen des Grundkörpers 31 befinden sich im wesentlichen zu seiner Mittelebene spiegelbildlich angeordnete Strukturen. So befindet sich auf einer ersten Oberfläche eine erste metallische Elektrode 33 und auf einer zweiten Oberfläche eine dritte metallische Elektrode 33'. Darauf sind eine erste bzw. zweite, jeweils aus einer ursprünglichen Glasfritte entstandene Glasschicht 34, 34' angeordnet.

Der Grundkörper 31 bildet mit der Membran 32 eine erste Kammer 36 und mit der Membran 32' eine zweite Kammer 36', da sie jeweils in einem definierten Abstand von z.B. wieder 20 µm mittels Materials der ursprünglichen Glasfritte als eines jeweiligen Abstandsstücks 37, 37' mit der ersten bzw. der zweiten Oberfläche des Grundkörper 31 am jeweiligen Rand entlang mechanisch fest und druckdicht verbunden sind.

Die Membranen 32, 32' sind jeweils kammerseitig mit einer zweiten bzw. einer vierten metallischen Elektrode 35, 35' versehen. Somit bilden die jeweils beiden Elektroden 33, 35 bzw. 33', 35' einen ersten bzw. einen zweiten Kondensator, deren Dielektrikum zum Teil aus der jeweiligen Glasschicht 34, 34' und zum Teil aus Füllöl (siehe unten) oder Luft oder Vakuum besteht.

Zu den Elektroden führen Zuleitungen 38, 38', 39, 39', die im Bereich der Abstandsstücke 37, 37' in Richtung zur jeweiligen Kammer führen. Es ist auch möglich, die Elektroden 35, 35' der jeweiligen Membran 32, 32' durch diese hindurch nach außen zu führen.

Das bei Erläuterung der Fig.1 zur Aufbringung und zur Erhitzung der Glasfritte Gesagte gilt für die Fig. 3 entsprechend.

Bei der In Fig. 4 wiederum im Schnitt dargestellten Weiterbildung des kapazitiven Differenzdrucksensors von Fig. 3 ist auf der gleichmäßig dünnen Glasschichten 34, 34', die wiederum aus einer Glasfritte nach deren Erhitzen entstanden sind, eine jeweilige dünne erste bzw. zweite Isolierschicht 40, 40' aus dem Material der Keramik des Grundkörpers 31 oder aus einem Hochtemperaturglas angebracht.

Auch in diesem Fall sind die Glasschichten 34, 34' am Rande nicht wie bei Fig. 3 verstärkt, sondern die Abstandsstücke 37, 37' werden durch einen jeweiligen auf den Rand der Isolierschichten 40, 40' aufgebrachten Ring aus Glasfritte gebildet.

Die beiden Varianten des kapazitiven Differenzdrucksensors der Fig. 3 und 4 weisen schließlich noch eine die beiden Kammern 36, 36' verbindende, durch den Grundkörper 31 und durch die zwischen ihm und der jeweiligen Kammer liegenden Schichten hindurch und nach außen führende Bohrung 41 auf. Diese und die Kammern sind mit Öl gefüllt, das über einen Stutzen 42 eingefüllt worden ist.

Die Keramik- oder Hochtemperaturglas-Isolierschichten haben z.B. eine Dicke von ca. 150 µm, wenn sie als vorgefertigtes Teil aufgebracht werden. Kleinere Dicken der Isolierschicht (bis zu 40 µm) können, falls erforderlich, erreicht werden, wenn die Isolierschicht in größerer Dicke aufgebracht wird, die anschließend durch Schleifen vermindert wird.

## Patentansprüche

1. Kapazitiver Drucksensor, der umfaßt:
- einen Grundkörper (11) aus Keramik,
-- auf dessen einer Oberfläche
--- eine erste metallische Elektrode (13) und
--- mindestens darauf eine aus einer ursprünglichen Glasfritte entstandene Glasschicht (14) angeordnet sind,
- eine Membran (12) aus Keramik,
-- die unter Bildung einer Kammer (16) in einem definierten Abstand mittels Materials der ursprünglichen Glasfritte als eines Abstandsstücks (17) mit dem Grundkörper (11) mechanisch fest und druckdicht verbunden ist und
-- die kammerseitig mit einer zweiten metallischen Elektrode (15) versehen ist, und
- Zuleitungen (18, 19),
-- die im Bereich des Abstandsstücks (17) nach innen und/oder durch die Membran (12) hindurch zu den Elektroden (13, 15) führen.

2. Kapazitiver Differenzdrucksensor, der umfaßt:
- einen Grundkörper (31) aus Keramik,
-- auf deren beiden voneinander abgewandten Oberflächen - der ersten bzw. der zweiten Oberfläche - jeweils
--- eine erste bzw. dritte metallische Elektrode (33, 33') und
--- mindestens darauf eine aus einer ursprünglichen Glasfritte entstandene erste bzw. zweite Glasschicht (34, 34') angeordnet sind,
- eine erste bzw. eine zweite Membran (32, 32') aus Keramik,
-- die unter Bildung einer ersten bzw. einer zweiten Kammer (36, 36') in einem definierten Abstand mittels Materials der ursprünglichen Glasfritte als eines jeweiligen Abstandsstücks (37, 37') mit der ersten bzw. der zweiten Oberfläche des Grundkörpers mechanisch fest und druckdicht verbunden und
-- die jeweils kammerseitig mit einer zweiten bzw. einer vierten metallischen Elektrode (35, 35') versehen sind,
- Zuleitungen (38, 38'; 39, 39'),
-- die im Bereich des jeweiligen Abstandsstücks (37, 37') nach innen und/oder durch die erste bzw. zweite Membran oder durch beide Membranen hindurch zu den jeweiligen Elektroden führen, und
- eine die beiden Kammern verbindende, mindestens durch den Grundkörper hindurch und nach außen führende Bohrung (41),
-- wobei die beiden Kammern und die Bohrung mit Öl gefüllt sind.

3. Kapazitiver Drucksensor nach Anspruch 1, bei dem auf der die erste Elektrode (13) bedeckenden Glasschicht (14) eine dünne Isolierschicht (20) aus dem Material der Keramik des Grundkörpers oder aus einem Hochtemperaturglas angebracht ist, wobei die Membran mit der Isolierschicht über das Abstandsstück (17) verbunden ist.

4. Kapazitiver Differenzdrucksensor nach Anspruch 2, bei dem auf der die ersten bzw. die dritten Elektrode (33, 33') bedeckenden jeweiligen Glasschicht (34, 34') eine jeweilige dünne Isolierschicht (40, 40') aus dem Material der Keramik des Grundkörpers oder aus einem Hochtemperaturglas angebracht ist, wobei die jeweilige Membran mit der jeweiligen Isolierschicht über das jeweilige Abstandsstück (37, 37') verbunden ist.

## Revendications

1. Capteur de pression capacitif qui comprend :
- un corps de base (11) en céramique,
-- sur une surface duquel sont disposées
--- une première électrode métallique (13), et
--- au moins par-dessus, une couche de verre (14) résultant d'un frittage initial du verre,
- une membrane (12) en céramique
-- qui, en formant une chambre (16) dans un intervalle défini, au moyen du matériau du frittage initial du verre servant d'entretoise (17), est reliée au corps de base (11) mécaniquement de façon fixe et étanche à la pression, et
-- qui, côté chambre, est dotée d'une seconde électrode métallique (15), et
- des conducteurs d'amenée (18, 19)
-- qui, dans la zone de l'entretoise (17), condui-sent vers l'intérieur et/ou qui, à travers la membrane (12), conduisent aux électrodes (13, 15).

2. Capteur capacitif de pression différentielle qui comprend :
- un corps de base (31) en céramique,
-- sur les deux surfaces duquel, placées à l'opposé l'une de l'autre - la première ou la seconde surface - sont disposées, respectivement,
--- une première ou une troisième électrode métallique (33, 33'), et
--- au moins par-dessus, une première ou une deuxième couche de verre (34, 34') résultant d'un frittage initial du verre,
- une première ou une deuxième membrane (32, 32') en céramique
-- qui, en formant une première ou une deuxième chambre (36, 36') dans un intervalle défini, au moyen du matériau du frittage initial du verre servant d'entretoise respective (37, 37'), est reliée à la première ou à la deuxième surface du corps de base, mécaniquement de façon fixe et étanche à la pression, et
-- qui, respectivement, côté chambre, est dotée d'une deuxième ou d'une quatrième électrode métallique (35, 35'), et
- des conducteurs d'amenée (38, 38' ; 39, 39')
-- qui, dans la zone de l'entretoise respective (37, 37'), conduisent vers l'intérieur et/ou qui, à travers la première ou la deuxième membrane, ou à travers les deux membranes, conduisent aux électrodes respectives, et
- un perçage (41) reliant les deux chambres, traversant au moins le corps de base et conduisant vers l'extérieur,
-- les deux chambres et le perçage étant remplis d'huile.

3. Capteur de pression capacitif selon la revendication 1, dans lequel, sur la couche de verre (14) recouvrant la première électrode (13), est appliquée une mince couche isolante (20) composée du matériau en céramique du corps de base ou composée d'un verre haute température, la membrane étant reliée à la couche isolante via l'entretoise (17).

4. Capteur capacitif de pression différentielle selon la revendication 2, dans lequel, sur la couche de verre (34, 34') respective recouvrant la première ou la troisième électrode (33, 33'), est appliquée une mince couche isolante (40, 40') respective composée du matériau en céramique du corps de base ou composée d'un verre haute température, la membrane respective étant reliée à la couche isolante respective via l'entretoise (37, 37') respective.

## Claims

1. A capacitive pressure sensor comprising:
- a substrate (11) made of ceramic material,
-- on one surface of which
--- a first metallic electrode (13) is disposed and
--- a glass layer (14) formed from an original glass frit is disposed at least on the first metallic electrode;
- a diaphragm (12) made of ceramic material,
-- which is permanently joined and pressure-sealed to the substrate by means of the original glass frit acting as a spacer (17) holding the diaphragm and the substrate (11) at a defined distance from each other to form a cavity (16), and
-- which on the cavity side is provided with a second metallic electrode (15); and
- leads (18, 19)
-- which, in the region of the spacer (17), extend inwards and/or through the diaphragm (12) to the electrodes (13, 15) .

2. A differential pressure sensor, comprising:
- a substrate (31) made of ceramic material,
-- whose surfaces facing away each other - the first and second surfaces - support
--- a first metallic electrode (33) and a third metallic electrode (33'), respectively,
--- a first glass layer (34) formed from an original glass frit at least on the first metallic electrode,
--- a second glass layer (34') formed from the original glass frit at least on the third metallic electrode,
- a first and a second diaphragm (32, 32') made of ceramic material,
-- which are permanently joined and pressure-sealed to the first and second surfaces of the substrate, respectively, by means of the original glass frit acting as a spacer (37, 37') holding the diaphragms and the substrate at defined distances from each other to form a first and second cavity (36, 36'), respectively, and
-- which on each cavity side are provided with a second and a fourth metallic electrode (35, 35'), respectively;
- leads (38, 38'; 39, 39'),
-- which, in the region of the respective spacer (37, 37'), extend inwards and/or through the first and the second diaphragm, respectively, or through both diaphragms to the respective electrodes; and
- a hole (41) connecting the two cavities and leading at least through the substrate and outwards,
-- the two cavities and the hole being filled with oil.

3. Capacitive pressure sensor according to claim 1 wherein a thin insulating layer (20) made of the ceramic material of the substrate or of a high-temperature glass is disposed on the glass layer (14) covering the first electrode (13), the diaphragm being permanently joined to the insulating layer via the spacer (17).

4. Differential pressure sensor according to claim 2 wherein thin insulating layers (40, 40') made of the ceramic material of the substrate or of a high-temperature glass are disposed on the glass layers (34, 34') covering the first and the third electrodes (33, 33'), respectively, the respective diaphragms being permanently joined to the respective insulating layers by means of the respective spacers (37, 37').
